(19) Europäisches Patentamt

European Patent Office

Office européen des brevets

(11) **EP 0 665 985 B1**

(12) **EUROPEAN PATENT SPECIFICATION**

(45) Date of publication and mention
of the grant of the patent:
**15.01.1997 Bulletin 1997/03**

(21) Application number: **93923949.7**

(22) Date of filing: **20.10.1993**

(51) Int Cl.[6]: **H01M 4/92**, B01J 23/89

(86) International application number:
**PCT/US93/10012**

(87) International publication number:
**WO 94/10715 (11.05.1994 Gazette 1994/11)**

(54) **PLATINUM-RHODIUM-IRON CATALYST**

Katalysator aus Platinum-Rhodium-Eisen

CATALYSEUR AU PLATINE-RHODIUM-FER

(84) Designated Contracting States:
**DE DK ES FR GB IT NL SE**

(30) Priority: **23.10.1992 US 965330**

(43) Date of publication of application:
**09.08.1995 Bulletin 1995/32**

(73) Proprietor: **INTERNATIONAL FUEL CELLS
CORPORATION
South Windsor, CT 06064 (US)**

(72) Inventors:
• **DELUCA, Karen, Espinosa
Sterling, CT 06377 (US)**

• **LUCZAK, Francis, J.
Glastonbury, CT 06033 (US)**

(74) Representative: **Klunker . Schmitt-Nilson . Hirsch
Winzererstrasse 106
80797 München (DE)**

(56) References cited:
**EP-A- 0 060 740        EP-A- 0 129 399
EP-A- 0 450 849        FR-A- 2 115 394
GB-A- 1 047 933        GB-A- 1 282 000
US-A- 3 765 947**

• **PATENT ABSTRACTS OF JAPAN vol. 12, no. 258
(C-513)(3105) 20 July 1988 & JP,A,63 044 940
(FUJI ELECTRIC CO LTD) 25 February 1988**

## Description

### Technical Field

The present invention relates to a catalyst, and especially to a platinum-rhodium-iron fuel cell catalyst.

### Background of the Invention

Fuel cells generate low voltage, direct current electricity through electrochemical reactions between a fuel, such as hydrogen, and an oxidant, such as oxygen. These fuel cells contain a catalytic anode and cathode with an electrolyte disposed therebetween. The introduction of hydrogen to the anode causes the reduction of the hydrogen to hydrogen ions and free electrons. These free electrons pass through an external load to the cathode, thereby producing electricity. Meanwhile, the hydrogen ions migrate through the electrolyte, to the cathode where they react with the free electrons and oxygen to form water.

Various catalysts have been developed to improve the rate of reaction at both the anode and the cathode. These catalysts range from pure noble metal catalysts, such as iridium, mercury, osmium, rhenium, ruthenium, palladium, platinum, and silver, to binary alloyed catalysts and ternary alloyed catalysts, such as platinum-cobalt catalysts, platinum-chromium catalysts, palladium-chromium catalysts, platinum-cobalt-chromium catalysts and many others.

Significant testing has been performed to improve catalyst performance. Preparation techniques which increase the initial active surface area and various chemical compositions which improve the stability of the catalyst with respect to dissolution and maintenance of active surface area, have been explored. As a result, fuel cell cathode catalysts having initial mass activities ranging from about 15 mA/mg platinum (milliamps per milligram of platinum) to about 50 mA/mg platinum have been developed (readings taken at 400°F (205°C), 0.9 volts, and atmospheric pressure).

However, in a phosphoric acid fuel cell, for example, the platinum in these catalysts begins to dissolve into the hot phosphoric acid immediately upon contact therewith, thereby decreasing the catalysts' mass activity. Consequently, catalysts initially having mass activities of about 50 mA/mg platinum only possess activities of about 30 mA/mg platinum or lower after about 10,000 hours of fuel cell operation, and about 15 mA/mg platinum after about 40,000 hours of operation. Therefore, although these catalysts may have a useful life beyond about 40,000 hours their mass activity will be less than about 15 mA/mg platinum. Note, the catalyst's mass activity corresponds to the catalyst's oxygen reduction activity which has been normalized for platinum, i.e. per mg of platinum.

What is needed in the art is an improved cathode catalyst which possesses physical and chemical stability and an activity greater than about 40 mA/mg platinum for more than about 10,000 hours of fuel cell operation.

### Disclosure of the Invention

The present invention relates to a platinum-rhodium-iron alloyed fuel cell catalyst. This catalyst is comprised of about 40 atom% to about 60 atom% platinum, about 10 atom% to about 20 atom% rhodium, and about 20 atom% to about 50 atom% iron.

The present invention further relates to an improved fuel cell. This fuel cell has an anode catalyst, an electrolyte, an anode chamber, and a cathode chamber. The improvement comprises a cathode catalyst having about 40 atom% to about 60 atom% platinum, about 10 atom% to about 20 atom% rhodium, and about 20 atom% to about 50 atom% iron.

The foregoing and other features and advantages of the present invention will become more apparent from the following description and accompanying drawings.

### Brief Description of the Drawings

Figure 1 is a graph of the performance stability of the platinum-rhodium-iron catalyst of the present invention over about 2700 hours.

Figure 2 is a graph of the performance stability of the platinum-rhodium-iron catalyst of the present invention over about 1900 hours.

These figures are meant to be exemplary and are not meant to limit the generally broad scope of the present invention.

### Best Mode for Carrying Out the Invention

The catalyst of the present invention is a ternary alloy catalyst composed of platinum (Pt), rhodium (Rh), and iron (Fe). The concentrations of platinum and rhodium in the active portion of the final catalyst (excluding the support) range from about 40 atomic percent (atom%) to about 60 atom% platinum and about 10 atom% to about 20 atom% rhodium, with about 45 atom% to about 55 atom% platinum and about 14 atom% to about 17 atom% rhodium preferred. Concentrations of about 48 atom% to about 52 atom% platinum and about 14 atom% to about 16 atom% rhodium are especially preferred with an iron concentration of about 31 atom% to about 35 atom% due to the high performance obtained at these concentrations. Iron concentrations in this ternary catalyst can, however, range from about 20 atom% to about 50 atom%, with about 27 atom% to about 42 atom% preferred.

This catalyst can be prepared utilizing conventional preparation techniques. One potential preparation technique comprises forming a platinum-rhodium precursor, depositing the iron onto this precursor, then heat treating the precursor to form the alloyed platinum-rhodium-iron catalyst. Another possible preparation technique comprises forming a supported platinum catalyst, depositing the rhodium and iron onto the platinum catalyst, and heat treating the catalyst. A third preparation technique comprises dissolving a platinum compound, an iron compound, and a rhodium compound in a dispersion containing a support, such that the platinum, iron, and rhodium are in their ionic forms. The platinum, rhodium, and iron are then precipitated out of solution, deposited onto the support, reduced to their metallic form with a reducing agent, and finally heat treated.

The precursor preparation consists of forming a dispersion of a soluble rhodium salt and a soluble platinum salt in the presence of a support. This platinum salt can be a conventional platinum salt reducible to metallic platinum with heat or a reducing agent, including: platinum IV chloride, platinum IV iodide, platinum sulfate, chloroplatinic acid, mixtures thereof, and others. Chloroplatinic acid has proven particularly useful due to its availability and ease of reduction. Similarly, conventional rhodium salts reducible to metallic rhodium with heat or a reducing agent, can be employed, including: rhodium nitrate, rhodium sulfate, rhodium sulfite, rhodium chloride, mixtures thereof, and others.

The support preferably has a surface area of about 50 $m^2/gm$ (square meters per gram) to about 1,000 $m^2/gm$ or greater. Possible supports include carbon based supports, such as graphitized carbons, and other conventional supports. Some such supports include Vulcan XC-72®, a carbon black produced by Cabot Corporation, Cambridge, Massachusetts, Vulcite®, graphitized Vulcan XC-72®, and Shawinigan Acetylene Black® produced by Chevron, San Francisco, California, with graphitized carbon the preferred support for a cathode catalyst due to its corrosion resistance. Typically, about 50 wt% (weight percent) to about 95 wt% support can be utilized, with about 70 wt% to about 95 wt% support preferred, based upon the weight of the final catalyst (the support and the metals).

Although the rhodium and platinum salts are dissolved and the support is dispersed in water, other conventional solvents which do not adversely affect the platinum, rhodium, support, or the final catalyst can be used to prepare the dispersion. Possible solvents include water based solvents, alcohol, ether, mixtures thereof, and others. Solvents possessing high dielectric constants, above about 20, reduce the bond strength between atoms in ionic compounds and allow the bonds to be broken more readily, thereby forming the ionic species. Consequently, water constitutes the preferred solvent since it possess a high dielectric constant of 81 and since it does not introduce any new constituents to the dispersion or the precursor.

Once the platinum and rhodium salts have been dissolved and the support has been dispersed in the solvent, a precipitant is added to the dispersion to precipitate the metal ions out of solution and deposit them onto the support. This precipitant can be any conventional means known in this art for precipitating, including an acid or base which moves the pH of the dispersion into a region where the metals precipitate.

The precipitated, supported metal ions are then converted to metallic platinum and rhodium with heat, a reducing agent, or other reduction means, to form the platinum-rhodium precursor. Possible reducing agents include formaldehyde, formic acid, formate, mixtures thereof, and others. These reducing agents are mixed in solution with the precipitated metal ions to reduce the ions to metallic platinum and rhodium. Heat reduction, on the other hand, comprises drying the dispersion to deposit the metal ions onto the support and heating the dried support and metal ions to temperatures of about 700°C (1292°F) to about 1000°C (1832°F) in an inert or hydrogen atmosphere to form the precursor.

The platinum-rhodium precursor is then utilized in forming the ternary platinum-rhodium-iron supported catalyst. The catalyst preparation comprises first dispersing the precursor in a solvent, while an iron salt is dissolved in either the same or a different solvent to form an iron solution. Possible iron salts which can be utilized to form the iron solution include iron nitrate, iron acetate, iron chloride, iron sulfate, mixtures thereof, and others. Although different solvents can be utilized for the platinum, rhodium, and iron salt, the iron salt is typically dissolved in the same solvent as the platinum and rhodium for reasons of convenience, to ensure complete mixing of the iron solution and the precursor dispersion, and to avoid any possible chemical reactions between the solvents themselves.

The iron solution is added to the precursor dispersion and blended well to form a substantially homogenous mixture which is heated and/or suction filtered to remove the solvent and to form a dried mixture. This dried mixture is heat treated in an oven with a flowing inert gas atmosphere to alloy the metals via a carbothermic reaction. The inert gas allows carbon in the support to reduce the iron, thereby forming the ternary catalyst (see Equation 1). Note, if the support does not contain carbon, a carbon containing gas can be utilized in this process.

$$Pt\text{-}Rh/C + Fe_xO_y \,\text{--}(N_2)\text{--}> Pt\text{-}Rh\text{-}Fe/C + CO \qquad\qquad (1)$$

Heat treatment temperatures range from about 800°C (1472°F) to about 1000°C (1832°F) for about 45 minutes to about 120 minutes.

Since it has been observed in many alloyed catalysts that an ordered alloy is more stable than a solid solution alloy, ordering of the alloyed catalyst is preferred. Ordering of the alloyed catalyst results in the metal atoms arranging themselves in an orderly, periodic manner over the sites of the crystal lattice, rather than in the random fashion of a solid solution alloy. It is believed that this ordering leads to a stronger interaction between the metals and therefore greater chemical stability. While little difference in initial catalytic activity is observed between ordered and solid solution alloys, a large difference is often observed over time. Since the catalytic activity is dependent upon the chemical composition of the alloy, it is desirable to maintain the chemical composition. The stronger interaction between the metals in the ordered alloy enable longer maintenance of the alloy's chemical composition and therefore longer maintenance of its catalytic activity than in the solid solution alloy.

Typically, ordering of the alloyed catalyst comprises subsequent heat treatment of the alloyed catalyst to about 500°C to about 600°C (about 932°F to about 1112°F) for about 40 minutes to about 120 minutes. For a 50 atom% platinum alloy, subsequent heat treatment means that if the crystal structure is a face-centered-cubic, the platinum atoms occupy the faces of the cube except for the top and the bottom while the rhodium and iron occupy the corner positions. For a solid solution of the same chemical composition the atoms can reside at any position in the crystalline structure.

The present invention will be clarified with reference to the following illustrative example. This example is given to illustrate the preparation of the platinum-rhodium-iron catalyst of the present invention. It is not, however, intended to limit the scope of the present invention.

Example

The following technique was employed to form a platinum-rhodium-iron catalyst having an atomic ratio of 50:15:35, respectively. This technique comprised first forming a platinum-rhodium precursor comprised of 10 wt% platinum, 0.33 wt% rhodium, balance Vulcite® and then using the precursor in the preparation of the platinum-rhodium-iron catalyst.

A. The platinum-rhodium precursor was formed as follows:

1. A dispersion of 6 grams (gm) of Vulcite® in 400 milliliters (ml) of distilled water was prepared and stirred for 18 hours to completely wet the Vulcite®.
2. The dispersion was ultrasonically blended with 2.0914 gm of sodium bicarbonate for 15 minutes and then boiled for 30 minutes while maintaining continuous stirring in order to set up sites on the Vulcite® for subsequent deposition of the metals.
3. Solutions of platinum and rhodium salts were prepared by mixing 25.22 gm of chloroplatinic acid with 100 ml of distilled water and 0.2265 gm of rhodium chloride with 30 ml of distilled water, respectively.
4. The rhodium solution was then mixed with 7.41 ml of the platinum solution and additional distilled water to attain 50 ml, thereby forming a platinum-rhodium solution.
5. The platinum-rhodium solution was added dropwise to the boiling dispersion over a period of 5 minutes. Boiling and stirring were maintained for an additional 30 minutes.
6. A dilute formaldehyde solution was then prepared by diluting 0.629 ml of a 30% formaldehyde solution with sufficient distilled water to attain a 50 ml solution.
7. The dilute formaldehyde solution was added dropwise to the boiling dispersion over 10 minutes. Boiling and stirring were maintained for an additional 30 minutes.
8. The platinum-rhodium-Vulcite® dispersion was then hot suction filtered through Whatman 42 filter paper to collect the precursor.
9. This precursor was rinsed four times to remove remaining chlorides by stirring it in a large beaker with 360 ml of distilled water and 120 ml of ammonium bicarbonate for 30 minutes and suction filtering.
10. The rinsed precursor was dried at 180°F (82°C) and sifted through an 80 mesh screen.

B. The ternary platinum-rhodium-iron catalyst was then formed from the above precursor as follows:

1. A dispersion of 2 gm of the precursor and 30 ml of distilled water were ultrasonically blended for 2 minutes.

2. A solution of 0.28992 gm iron nitrate in 15 ml of distilled water was prepared and added to the precursor dispersion.

3. The pH of the iron-precursor dispersion was adjusted to 5.5 with dilute ammonium hydroxide solution to induce iron adsorption onto the precursor.

4. The iron-precursor dispersion was then ultrasonically blended for 2 minutes and magnetically stirred for 25 minutes while maintaining a 5.5 pH to prevent the iron from redissolving, thereby ensuring intimate contact between the precursor and the iron and to form the catalyst.

5. The catalyst was dried in an oven at 180°F (82°C) for 18 hours and then sifted through an 80 mesh screen.

6. The platinum, rhodium, and iron in the catalyst were then alloyed and ordered by heating the catalyst to 1700°F (927°C) for one hour and to 1100°F (593°C) for one hour in a nitrogen environment, thereby forming a face centered cubic alloyed catalyst with platinum on the faces.

The catalyst described above was utilized to fabricate electrodes which were evaluated for initial oxygen reduction activity in a half-cell apparatus. The test conditions were 350°F (177°C) and 99% phosphoric acid at 0.9 volts versus a static hydrogen electrode under oxygen. The activity of this catalyst and that of prior art catalysts is shown in Table I below.

| Catalyst | Mass Activity (mA/mg Pt) |
|---|---|
| $Pt_{50}$-$Rh_{15}$-$Fe_{35}$ | 47.7 |
| $Pt_{50}$-$Co_{30}$-$Cr_{20}$ | 38.0 |
| $Pt_{50}$-$Ir_{30}$-$Cr_{20}$ | 44.8 |
| Pt | 25.0 |
| Co - Cobalt<br>Cr - Chromium<br>Ir - Iridium | |

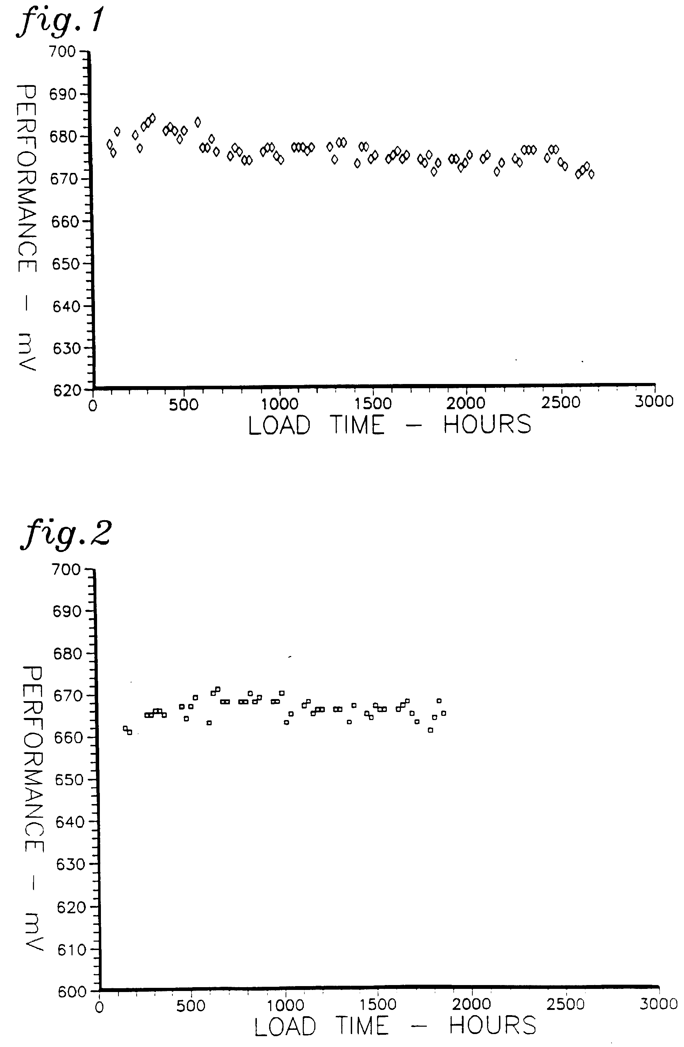

In addition to mass activity, performance stability and chemical stability have been evaluated in a subscale fuel cell for times greater than 2,000 hours. (see Figures 1 and 2) These evaluation tests were performed at a cell temperature of 205°C (400°F), current density of 18.6 $A/m^2$ (Amps per square meter) (200 ASF), with an RL1 fuel utilization of 80% and oxidant air utilization of 50% for Figure 1. Meanwhile, the evaluation test of Figure 2 was performed at a cell temperature of 205°C (400°F) and a current density of 20.9 $A/m^2$ (225 ASF), with a RL1 fuel utilization of 80% and an oxidant air utilization of 60%. Note, RL1 is a fuel comprised of about 70 volume percent (v/o) hydrogen, about 29 v/o carbon dioxide, and about 1 v/o carbon monoxide.

Table II summarizes the chemical and structural stability of the platinum-rhodium-iron catalyst by revealing the results of tests in 5.08CM (centimeter) (2 inch) by 5.08CM (2 inch) subscale cells. These results indicate that the chemical structure and surface area stability are better than a platinum-cobalt-chromium alloy after a comparable test program. For example, over an approximately 5,000 hour period, the surface area of the platinum-chromium-cobalt catalyst decreased about 63%, while the surface area of the platinum-rhodium-iron catalyst of the present invention merely decreased about 48%.

TABLE II

| Catalyst | Load Time hrs. | Chemical Analysis mg/$cm^2$ | | | Surface Area $m^2$/gm | Lattice Parameter Å |
|---|---|---|---|---|---|---|
| | | Pt | Rh | Fe | | |
| Pt-Rh-Fe 50:15:35 | 0 | 0.50 | 0.08 | 0.10 | 50 | 3.86 |
| Pt-Rh-Fe 50:15:35 | 2103 | 0.38 | 0.022 | 0.11 | 41 | 3.83 |
| Pt-Rh-Fe 50:15:35 | 5244 | 0.36 | 0.025 | 0.02 | 26 | 3.86 |
| | | Pt | Co | Cr | | |
| Pt-Co-Cr 50:30:20 | 0.0 | 0.50 | 0.091 | 0.053 | 60 | 3.82 |

TABLE II   (continued)

| Catalyst | Load Time hrs. | Chemical Analysis mg/cm$^2$ | | | Surface Area m$^2$ /gm | Lattice Parameter Å |
|---|---|---|---|---|---|---|
| | | Pt | Rh | Fe | | |
| | | Pt | Co | Cr | | |
| Pt-Co-Cr 50:30:20 | 5000 | 0.45 | 0.006 | 0.037 | 22 | 3.91 |

Typically, phosphoric acid fuel cells operate at about 300°F (149°C) to about 400°F (205°C) and about 0.5 volts to about 0.8 volts at atmospheric pressure. The platinum-rhodium-iron alloyed catalyst of the present invention has demonstrated a mass activity greater than about 45 mA/mg of platinum for at least 5,000 hours under these conditions (note readings taken at 400°F (205°C), 0.9 volts, and atmospheric pressure). In contrast, prior art catalysts who possess initial mass activities of up to about 50 mA/mg of platinum, typically have activities below about 40 mA/mg after about 1,000 hours of fuel cell operation.

It is believed through the above experimentation and extrapolation that the catalyst of the present invention can maintain an activity above about 40 mA/mg platinum for over 10,000 hours of fuel cell operation. Additionally, it is believed that the catalyst stability and mass activity will be much greater if the fuel cell is operated at about 149°C (300°F), up to about 0.8 volts, and atmospheric pressure, and the mass activity readings are, again, taken at about 205°C (400°F), about 0.9 volts, and atmospheric pressure.

## Claims

1.  A platinum-rhodium-iron alloyed catalyst, which comprises: about 40 atom% to about 60 atom% platinum; about 10 atom% to about 20 atom% rhodium; and about 20 atom% to about 50 atom% of iron.

2.  A catalyst as in Claim 1, wherein said catalyst maintains a mass activity for oxygen reduction of at least about 40 mA/mg platinum at about 0.9 volts, about 205°C (400°F), and atmospheric pressure after at least about 10,000 hours of fuel cell operation at about 149°C (300°F) to about 205°C (400°F), about 0.5 volts to about 0.8 volts, and atmospheric pressure.

3.  A catalyst as in Claim 1 having about 45 atom% to about 55 atom% platinum; about 13 atom% to about 18 atom% rhodium; and about 27 atom% to about 42 atom% iron.

4.  A catalyst as in Claim 1 having about 48 atom% to about 52 atom% platinum; about 14 atom% to about 17 atom% rhodium; and about 31 atom% to about 38 atom% iron.

5.  A catalyst as in Claim 1, wherein said catalyst platinum, rhodium, and iron are supported on a support.

6.  A catalyst as in Claim 5, wherein said support is a carbon based support.

7.  A catalyst as in Claim 5, wherein the catalyst has about 50 wt% to about 95 wt% support.

8.  An improved fuel cell having an anode catalyst, an electrolyte, an anode chamber, and a cathode chamber, wherein the improvement comprises a cathode catalyst comprising: about 40 atom% to about 60 atom% platinum; about 10 atom% to about 20 atom% rhodium; and about 20 atom% to about 50 atom% of iron.

9.  An improved fuel cell as in Claim 8, wherein said catalyst maintains a mass activity for oxygen reduction of at least about 40 mA/mg platinum at about 0.9 volts, about 205°C (400°F), and atmospheric pressure after at least about 10,000 hours of fuel cell operation at about 149°C (300°F) to about 205°C (400°F), about 0.5 volts to about 0.8 volts, and atmospheric pressure.

10.  An improved fuel cell as in Claim 8 having about 45 atom% to about 55 atom% platinum; about 13 atom% to about 18 atom% rhodium; and about 27 atom% to about 42 atom% iron.

11.  An improved fuel cell as in Claim 8 having about 48 atom% to about 52 atom% platinum; about 14 atom% to about 17 atom% rhodium; and about 31 atom% to about 38 atom% iron.

**12.** An improved fuel cell as in Claim 8, wherein the fuel cell is an acid fuel cell.

**13.** An improved fuel cell as in Claim 8, wherein said platinum, rhodium, and iron are supported on a support.

**14.** A catalyst as in Claim 13, wherein said support is a carbon based support.

**15.** A catalyst as in Claim 13, wherein said cathode catalyst has about 50 wt% to about 95 wt% support.

**Patentansprüche**

**1.** Platin-Rhodium-Eisen-Legierung-Katalysator, enthaltend: etwa 40 Atom% bis etwa 60 Atom% Platin; etwa 10 Atom% bis etwa 20 Atom% Rhodium; und etwa 20 Atom% bis etwa 50 Atom% Eisen.

**2.** Katalysator nach Anspruch 1, bei dem der Katalysator eine Massenaktivität für Sauerstoffreduktion von mindestens etwa 40 mA/mg Platin bei etwa 0,9 Volt, etwa 205°C (400°F) und Atmosphärendruck nach mindestens etwa 10000 Stunden Brennstoffzellenbetrieb bei etwa 149°C (300°F) bis etwa 205°C (400°F), etwa 0,5 Volt bis etwa 0,8 Volt und Atmosphärendruck beibehält.

**3.** Katalysator nach Anspruch 1 mit etwa 45 Atom% bis etwa 55 Atom% Platin; etwa 13 Atom% bis etwa 18 Atom% Rhodium und etwa 27 Atom% bis etwa 42 Atom% Eisen.

**4.** Katalysator nach Anspruch 1 mit etwa 48 Atom% bis etwa 52 Atom% Platin; etwa 14 Atom% bis etwa 17 Atom% Rhodium und etwa 31 Atom% bis etwa 38 Atom% Eisen.

**5.** Katalysator nach Anspruch 1, bei dem das Katalysator-Platin, -Rhodium und -Eisen auf einem Träger getragen sind.

**6.** Katalysator nach Anspruch 5, bei dem Träger ein Träger auf Kohlenstoffbasis ist.

**7.** Katalysator nach Anspruch 5, bei dem der Katalysator etwa 50 Gewichts% bis etwa 95 Gewichts% Träger besitzt.

**8.** Verbesserte Brennstoffzelle mit einem Anodenkatalysator, einem Elektrolyten, einem Anodenraum und einem Kathodenraum, bei der die Verbesserung einen Kathodenkatalysator aufweist, der enthält: etwa 40 Atom% bis etwa 60 Atom% Platin; etwa 10 Atom% bis etwa 20 Atom% Rhodium und etwa 20 Atom% bis etwa 50 Atom% Eisen.

**9.** Verbesserte Brennstoffzelle nach Anspruch 8, bei der der Katalysator eine Massenaktivität für Sauerstoffreduktion von mindestens etwa 40 mA/mg Platin bei etwa 0,9 Volt, etwa 205°C (400°F) und Atmosphärendruck nach mindestens etwa 10000 Stunden Brennstoffzellenbetrieb bei etwa 149°C (300°F) bis etwa 205°C (400°F), etwa 0,5 Volt bis etwa 0,8 Volt und Atmosphärendruck beibehält.

**10.** Verbesserte Brennstoffzelle nach Anspruch 8 mit etwa 45 Atom% bis etwa 55 Atom% Platin; etwa 13 Atom% bis etwa 18 Atom% Rhodium und etwa 27 Atom% bis etwa 42 Atom% Eisen.

**11.** Verbesserte Brennstoffzelle nach Anspruch 8 mit etwa 48 Atom% bis etwa 52 Atom% Platin; etwa 14 Atom% bis etwa 17 Atom% Rhodium und etwa 31 Atom% bis etwa 38 Atom% Eisen.

**12.** Verbesserte Brennstoffzelle nach Anspruch 8, bei der die Brennstoffzelle eine Säure-Brennstoffzelle ist.

**13.** Verbesserte Brennstoffzelle nach Anspruch 8, bei der das Platin, Rhodium und Eisen auf einem Träger getragen sind.

**14.** Katalysator nach Anspruch 13, bei dem der Träger ein Träger auf Kohlenstoffbasis ist.

**15.** Katalysator nach Anspruch 13, bei dem der Kathodenkatalysator etwa 50 Gewichts% bis etwa 95 Gewichts% Träger besitzt.

**Revendications**

1. Catalyseur à base d'alliage platine-rhodium-fer, comprenant : d'environ 40 à environ 60 % d'atomes de platine; d'environ 10 à environ 20 % d'atomes de rhodium; et d'environ 20 à environ 50 % d'atomes de fer.

2. Catalyseur selon la revendication 1, dans lequel ledit catalyseur conserve une activité de masse pour la réduction de l'oxygène d'au moins environ 40 mA/mg de platine, à environ 0,9 Volt, une température d'environ 205 °C (400 °F) et à la pression atmosphérique, après au moins environ 10000 heures de fonctionnement de la pile à combustible à une température d'environ 149 °C (300 °F) jusqu'à environ 205 °C (400 °F), sous une tension d'environ 0,5 Volt à environ 0,8 Volt, et à la pression atmosphérique.

3. Catalyseur selon la revendication 1, ayant d'environ 45 à environ 55 % d'atomes de platine, d'environ 13 à environ 18 % d'atomes de rhodium; et d'environ 27 à environ 42 % d'atomes de fer.

4. Catalyseur selon la revendication 1, ayant d'environ 48 à environ 52 % d'atomes de platine; d'environ 14 environ 17 % d'atomes de rhodium; et d'environ 31 à environ 38 % de fer.

5. Catalyseur selon la revendication 1, dans lequel ledit platine, rhodium et fer du catalyseur sont supportés sur un support.

6. Catalyseur selon la revendication 5, dans lequel ledit support est un support à base de carbone.

7. Catalyseur selon la revendication 5, dans lequel le catalyseur présente d'environ 50 à environ 95 % en poids de support.

8. Pile à combustible améliorée ayant un catalyseur d'anode, un électrolyte, une chambre d'anode et une chambre de cathode, dans laquelle l'amélioration comprend un catalyseur de cathode comprenant : d'environ 40 à environ 60 % d'atomes de platine; d'environ 10 à environ 20 % d'atomes de rhodium; et d'environ 20 à environ 50 % d'atomes de fer.

9. Pile à combustible améliorée selon la revendication 8, dans laquelle ledit catalyseur maintient une activité de masse pour la réduction de l'oxygène d'air moins environ 40 mA/mg de platine à environ 0,9 Volt, d'environ 205 °C (400 °F), et ensuite une pression atmospherique d'au moins environ 10000 heures de fonctionnement de pile à combustible d'environ 149 °C (300 °F) jusqu'à environ 205 °C (400 °F), d'environ 0,5 Volt à environ 0,8 Volt et à la pression atmosphérique.

10. Pile à combustible améliorée selon la revendication 8, ayant d'environ 45 à environ 55 % d'atomes de platine: d'environ 13 à environ 18 % d'atomes de rhodium; et d'environ 27 à environ 42 % de fer.

11. Pile à combustible améliorée selon la revendication 8, ayant d'environ 48 à environ 52 % d'atomes de platine; d'environ 14 à environ 17 % d'atomes de rhodium; et d'environ 31 à environ 38 % d'atomes de fer.

12. Pile à combustible améliorée selon la revendication 8, dans laquelle la pile à combustible est une pile à combustible à base d'acide.

13. Pile à combustible améliorée selon la revendication 8, dans laquelle lesdits platine, rhodium et fer sont placés sur un support.

14. Catalyseur selon la revendication 13, dans lequel ledit support est un support à base de carbone.

15. Catalyseur selon la revendication 13, dans lequel ledit catalyseur de cathode présente d'environ 50 à environ 95 % en poids de support.

fig.1

fig.2